(19) Europäisches Patentamt
European Patent Office
Office européen des brevets

(11) **EP 3 653 657 A1**

(12) **EUROPÄISCHE PATENTANMELDUNG**

(43) Veröffentlichungstag:
**20.05.2020** Patentblatt **2020/21**

(21) Anmeldenummer: **18206860.1**

(22) Anmeldetag: **16.11.2018**

(51) Int Cl.:
**C08G 18/48** (2006.01)      **C08G 18/56** (2006.01)
**C08G 18/73** (2006.01)      **C08G 18/75** (2006.01)
**C08G 18/76** (2006.01)      **C08G 2/30** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON PRÄPOLYMEREN UMFASSEND EINEN POLYOXYMETHYLEN-BLOCK**

(57)   Die vorliegende Erfindung beschreibt ein Verfahren zur Herstellung von Präpolymeren umfassend einen Polyoxymethylen-Block. Sie betrifft weiterhin durch ein solches Verfahren erhältliche Präpolymere sowie Mischungen aus diesen Präpolymeren mit OH-reaktiven Verbindungen, bevorzugt Polyisocyanaten. Auch chemisch-technisches Verfahren zur Herstellung eines chemischen Produktes definierter Zusammensetzung sind Gegenstand der vorliegenden Anmeldung.

EP 3 653 657 A1

**Beschreibung**

Die vorliegende Erfindung beschreibt ein Verfahren zur Herstellung von Präpolymeren umfassend einen Polyoxymethylen-Block. Sie betrifft weiterhin durch ein solches Verfahren erhältliche Präpolymere sowie Mischungen aus diesen Präpolymeren mit OH-reaktiven Verbindungen, bevorzugt Polyisocyanaten.

Blockcopolymere enthaltend Polyoxymethylen-Einheiten neben anderen Polymerisat- und Polykondensat-Einheiten werden beispielsweise in JP 2007 211082 A, WO 2004/096746 A1, GB 807589, EP 1 418 190 A1, US 3,754,053, US 3,575,930, US 2002/0016395, EP 3 129 419 B1 und JP 04-306215 beschrieben.

Langanke et al. beschreibt im Journal of Polymer Science, Part A: Polymer Chemistry (2015), 53(18), 2071-2074 die Synthese von Formaldehyd-basierten Polyether(-carbonat)-Polyolen sowie die ökonomischen und ökologischen Vorteile der Nutzung von Polyacetalen wie Paraformaldehyd.

US 3575930 A beschreibt ein Verfahren zur Herstellung von NCO Präpolymeren, dadurch gekennzeichnet, dass sie durch Umsetzung von niedermolekularem pFA (n = 2-64) mit Diisocyanaten im Überschuss herstellbar sind. Die niedermolekularen pFA Fraktionen werden durch Extraktion mit siedendem Dioxan (Sdp. 101 °C) und anschließender Filtration erhalten und sind nicht lagerbar. Darüber hinaus ist ein energieintensiver azeotroper Destillationsschritt mit Benzol notwendig, um die niedermolekularen pFA Fraktionen in Lösung von Wasser zu befreien.

WO 2004/096746 offenbart die Reaktion von Formaldehyd-Oligomeren mit Alkylenoxiden und/oder Isocyanaten. Bei dieser Methode werden über den beschriebenen Einsatz von Formaldehyd-Oligomeren HO-$(CH_2O)_n$-H Polyoxymethylen-Blockcopolymere mit einer relativ engen Molmassenverteilung von n = 2-19 erhalten, wobei für die Bereitstellung der Formaldehyd-Oligomere ausgehend von wässriger Formalinlösung ein zusätzlicher thermischer Abtrenn-Verfahrensschritt erforderlich ist. Die erhaltenen Formaldehyd-Oligomer-Lösungen sind hierbei nicht lagerstabil, so dass diese anschließend sofort weiterverarbeitet werden müssen.

In WO 2014/095679 A1 wird ein Verfahren zur Herstellung von NCO-modifizierten Polyoxymethylen-Block-Copolymeren offenbart, umfassend den Schritt der Polymerisation von Formaldehyd in einem Reaktionsgefäß in Gegenwart eines Katalysators, wobei die Polymerisation von Formaldehyd weiterhin in Gegenwart einer Starterverbindung mit mindestens 2 Zerewitinoffaktiven H-Atomen unter Erhalt eines Zwischenprodukts erfolgt und dieses mit einem Isocyanat umgesetzt wird.

In der noch nicht offengelegten Anmeldung EP 17206871.0 wird ein Verfahren zur Herstellung eines Polyoxymethylen-Gruppen enthaltenden Präpolymers, umfassend den Schritt der Reaktion einer Polyolkomponente mit einer gegenüber OH-Gruppen reaktiven Verbindung, wobei die Polyolkomponente ein OH-Endgruppen enthaltendes Polyoxymethylen umfasst, dessen OH-Endgruppen nicht Teil von Carboxylgruppen sind. Die Reaktion wird in Gegenwart einer ionischen Fluorverbindung durchgeführt, wobei die ionische Fluorverbindung eine koordinativ gesättigte Verbindung ist. Nachteilig an dieser Verfahrensweise ist, dass Fluorverbindungen vor der Umsetzung der Präpolymere zu Polyurethan-Schäumen abgetrennt werden müssen, da sie sich negativ auf die Schaumbildungsreaktionen auswirken können.

Nach dem bisherigen Stand der Technik wird die Umsetzung von polymerem Formaldehyd entweder bei verhältnismäßig hohen Temperaturen durchgeführt, wobei eine Depolymerisation der polymeren Formaldehyd-Verbindungen eintritt oder es müssen teilweise zusätzliche Fluor-haltige Verbindungen als Lösungsvermittler zugesetzt werden, um das Lösungsverhalten des schwerlöslichen polymeren Formaldehyds zu verbessern, welches die nachfolgenden Reaktionen wie beispielsweise der Polyurethanisierungsreaktion stören kann und einem zusätzlichen Verfahrensschritt abgetrennt werden muss.

Ausgehend vom Stand der Technik ergab sich Aufgabe, ein einfaches und thermisch schonendes Verfahren bereitzustellen, um schwerlösliche polymere Formaldehyde in technisch prozessierbare und definierte, reaktive Präpolymer-Verbindungen bevorzugt NCO-terminierte Präpolymere, ohne Zusatz unnötiger Lösungsvermittler zu überführen, so dass die Verbindungen einerseits chemisch stabil und somit lagerbar sind als auch direkt in nachgelagerten Folgereaktionen wie beispielsweise Polyurethanisierungsreaktionen umgesetzt werden können. Ein weiterer Aspekt des erfindungsgemäßen Verfahrens ist die Reduktion des Lösungsmittelbedarfs.

Erfindungsgemäß gelöst wird diese Aufgabe durch ein Verfahren zur Herstellung eines Präpolymers umfassend einen Polyoxymethylen-Block, wobei das Verfahren folgende Schritte umfasst:

i) Herstellung einer Formaldehyd Lösung (a) durch Zugabe eines Lösungsmittels zu polymerem Formaldehyd in einem ersten Behälter;

ii) Entnahme der in Schritt i) hergestellten Formaldehydlösung aus dem ersten Behälter und Überführung in einen zweiten OH-reaktive Verbindung enthaltenden Behälter unter Bildung einer das Präpolymer enthaltenden Lösung (b);

iii) Destillative Rückführung des Lösungsmittels aus dem zweiten Behälter in den ersten Behälter;

wobei das Formaldehyd m terminale Hydroxylgruppen aufweist;

wobei m eine natürliche Zahl von zwei oder mehr ist,

wobei die OH-reaktive Verbindung m oder mehr terminale OH-reaktive Gruppen aufweist;

wobei das Lösungsmittel keine OH-reaktiven funktionellen Gruppen enthält sowie selbst nicht mit OH-reaktiven Verbindungen reagiert;

wobei die Lösung (b) in Schritt ii) eine Temperatur im zweiten Behälter kleiner oder gleich 80 °C bevorzugt kleiner oder gleich 70 °C und besonders bevorzugt kleiner oder gleich 60 °C aufweist;

und wobei die Temperatur der Formaldehyd Lösung (a) im ersten Behälter in Schritt i) kleiner oder gleich als die Temperatur der Lösung (b) im zweiten Behälter ist.

Die Verwendung des Worts ein im Zusammenhang mit zählbaren Größen ist hierbei und im Folgenden nur dann als Zahlwort zu verstehen, wenn dies aus dem Zusammenhang hervorgeht (bspw. durch die Formulierung "genau ein"). Ansonsten umfassen Ausdrücke wie" "eine polymere Formaldehydverbindung" etc. immer auch solche Ausführungsformen, in denen zwei oder mehr polymere Formaldehydverbindungen etc. eingesetzt werden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Präpolymere umfassend einen Polyoxymethylen-Block im Sinne der Erfindung bezeichnen polymere Verbindungen, die mindestens einen Polyoxymethylen-Block sowie mindestens einen zusätzlichen molekularen Einheit (z.B. Urethan-Molekül mit zusätzlicher Isocyanat (NCO)-Funktionalität) enthalten.

## Formaldehyd

Im erfindungsgemäßen Verfahren wird polymeres Formaldehyd verwendet wobei das Formaldehyd m terminale Hydroxylgruppe aufweist und m eine natürliche Zahl von zwei oder mehr bevorzugt von 2 oder 3 ist.

Als polymeres Formaldehyd für das erfindungsgemäße Verfahren eignen sich grundsätzlich solche oligomeren und polymeren Formen des Formaldehyds, welche wenigstens zwei terminale Hydroxylgruppen zur Reaktion mit den OH-reaktiven Gruppen einer OH-reaktiven Verbindung aufweisen. Unter dem Begriff "terminale Hydroxylgruppe" wird erfindungsgemäß insbesondere eine terminale Halbacetal-Funktionalität verstanden, welche sich als Strukturmerkmal über die Polymerisation des Formaldehyds ergibt. Beispielsweise können die Starterverbindungen Oligomere und Polymere des Formaldehyds der allgemeinen Formel $HO-(CH_2O)_n-H$ sein, wobei n für eine natürliche Zahl $\geq 2$ steht und wobei polymeres Formaldehyd typischerweise n > 8 Wiederholungseinheiten aufweist.

Für das erfindungsgemäße Verfahren geeignetes polymeres Formaldehyd weist im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol auf und umfasst von 2 bis 1000, bevorzugt von 2 bis 400, besonders bevorzugt von 8 bis 200 und ganz besonders bevorzugt von 8 bis 100 Oxymethylen-Wiederholungseinheiten. Die im erfindungsgemäßen Verfahren eingesetzte polymere Formaldehyd hat typischerweise eine Funktionalität (F) von 1 bis 3, in bestimmten Fällen können diese aber auch höherfunktionell sein, also eine Funktionalität > 3 besitzen. Bevorzugt wird im erfindungsgemäßen Verfahren offenkettiges polymeres Formaldehyd mit terminalen Hydroxylgruppen eingesetzt, welches eine Funktionalität von 1 bis 10, bevorzugt von 1 bis 5, besonders bevorzugt von 2 bis 3 hat. Ganz besonders bevorzugt wird im erfindungsgemäßen Verfahren lineares polymeres Formaldehyd eingesetzt, welches eine Funktionalität von 2 mit 2 terminalen Hydroxylgruppen aufweist. Die Funktionalität F entspricht der Anzahl an OH-Endgruppen (Hydroxylgruppen m) pro Molekül.

Die Herstellung von polymeren Formaldehyd, welches für das erfindungsgemäße Verfahren eingesetzt wird, kann nach bekannten Verfahren erfolgen (vgl. z.B. M. Haubs et. al., 2012, Polyoxymethylenes, Ullmann's Encyclopedia of Industrial Chemistry; G. Reus et. al., 2012, Formaldehyde, ibid). Das polymere Formaldehyd kann im erfindungsgemäßen Verfahren grundsätzlich auch in Form eines Copolymers eingesetzt werden, wobei als Comonomere neben Formaldehyd beispielsweise 1,4-Dioxan, oder 1,3-Dioxolan einpolymerisiert sind. Weitere geeignete Formaldehyd-Copolymere für das erfindungsgemäße Verfahren sind Copolymere des Formaldehyds sowie des Trioxans mit cyclischen und/oder linearen Formalen, wie beispielsweise Butandiolformal, Epoxiden oder cyclischen Carbonaten (vgl. z.B. EP 3 080 177 B1). Es ist ebenfalls denkbar, dass als Comonomere höhere homologe Aldehyde, wie beispielweise Acetaldehyd, Propionaldehyd, etc., in das Formaldehyd-Polymer eingebaut sind. Ebenfalls ist es denkbar, dass erfindungsgemäße polymere Formaldehyd wiederum ausgehend von H-funktionellen Starterverbindungen hergestellt wird, insbesondere lassen sich hierbei durch den Einsatz von mehrwertigen Starterverbindungen polymeres Formaldehyd mit einer Hydroxy-Endgruppen-Funktionalität F > 2 erhalten (vgl. z.B. WO 1981001712 A1, Bull. Chem. Soc. J., 1994, 67, 2560-2566, US 3436375, JP 03263454, JP 2928823).

Bekanntlich polymerisiert Formaldehyd bereits durch die Gegenwart geringer Wasserspuren. In wässriger Lösung bildet sich daher in Abhängigkeit von Konzentration und Temperatur der Lösung ein Gemisch von Oligomeren und Polymeren unterschiedlicher Kettenlängen, welche mit molekularem Formaldehyd und Formaldehyd-Hydrat im Gleichgewicht stehen. Sogenanntes Paraformaldehyd fällt hierbei als ein weißer, schlecht-löslicher Feststoff, aus der Lösung aus und stellt in der Regel ein Gemisch linearer Formaldehyd-Polymere mit 8 bis 100 Oxymethylen-Wiederholungseinheiten dar.

Ein Vorteil des erfindungsgemäßen Verfahrens liegt insbesondere darin, dass polymeres Formaldehyd bzw. sogenanntes Paraformaldehyd, welches kommerziell großtonnagig und kostengünstig erhältlich ist und eine vorteilhafte $CO_2$-Bilanz (engl. carbon footprint, 1,4 $CO_2$e/kg) aufweist, direkt als Starterverbindung eingesetzt werden kann, ohne dass hierbei zusätzliche vorbereitende Schritte nötig sind. Im erfindungsgemäßen Verfahren wird daher Paraformaldehyd als Starterverbindung eingesetzt. Insbesondere lassen sich über das Molekulargewicht und die Endgruppenfunktionalität der polymeren Formaldehyd-Starterverbindung Polyoxymethylen-Blöcke mit definiertem Molgewicht und Funktionalität in das Produkt einbringen.

Vorteilhafterweise kann hierbei im erfindungsgemäßen Verfahren die Länge des Polyoxymethylen-Blocks einfach über das Molekulargewicht der eingesetzten Formaldehyd-Starterverbindung gesteuert werden. Vorzugsweise werden hierbei lineare Formaldehyd-Starterverbindungen der allgemeinen Formel HO-$(CH_2O)_n$-H, wobei n für eine ganze Zahl $\geq 2$ steht, bevorzugt mit n= 2 bis 1000, besonders bevorzugt mit n = 2 bis 400 und ganz besonders bevorzugt mit n = 8 bis 100, mit zwei terminalen Hydroxylgruppen eingesetzt. Insbesondere können als Starterverbindung auch Gemische von polymeren Formaldehyd-Verbindungen der Formel HO-$(CH_2O)_n$-H mit jeweils unterschiedlichen Werten für n eingesetzt werden. In einer vorteilhaften Ausführungsform enthalten die eingesetzten Gemische von polymeren Formaldehyd-Starterverbindungen der Formel HO-$(CH_2O)_n$-H wenigstens 1 Gew-%, bevorzugt wenigstens 5 Gew.-% und besonders bevorzugt wenigstens 10 Gew.-% an polymeren Formaldehyd-Verbindungen mit n $\geq$ 20.

Über das erfindungsgemäße Verfahren werden Präpolymere umfassend einen Polyoxymethylen-Block erhalten, welche eine A-B-A Blockstruktur umfassend einen inneren Polyoxymethylen-Block (B) mit einer Funktionalität F= 2 und 2 terminalen Hydroxylgruppen und äußere funktionelle Einheiten A, welche aus der OH-reaktiven Verbindung enthaltend m terminale OH-reaktive Gruppen resultiert, aufweist. Es ist erfindungsgemäß ebenso möglich, dass Formaldehyd-Starterverbindungen mit einer Hydroxy-Endgruppen-Funktionalität F > 2 eingesetzt werden, worüber sich folglich homologe Blockstrukturen A-B-(-A)$_{y-1}$ mit einer Anzahl y >2 an äußeren Einheiten (A), die entsprechend aus der Funktionalität der eingesetzten Formaldehyd-Starterverbindung resultiert, darstellen lassen. Ebenso ist es grundsätzlich möglich, dass Formaldehyd-Starterverbindungen mit einer Funktionalität F < 2 eingesetzt werden, dies können beispielweise auch lineare Formaldehyd-Starterverbindungen mit F = 1 sein, welche an einem Kettenende mit einer Schutzgruppe oder durch andere chemische Reste substituiert sind.

Ein Polyoxymethylen-Block im Sinne der Erfindung bezeichnet eine polymere Struktureinheit-$(CH_2$-O-$)_x$ wobei x für eine ganze Zahl $\geq 2$ steht, die mindestens eine an zwei Sauerstoffatome gebundene $CH_2$-Gruppe enthält, welche über mindestens eines der Sauerstoffatome mit weiteren Methylengruppen oder anderen polymeren Strukturen verbunden ist. Bevorzugt enthalten Polyoxymethylen-Blöcke -$(CH_2$-O-$)_x$ durchschnittlich x $\geq 2$ bis x $\leq 1000$, mehr bevorzugt durchschnittlich x $\geq 2$ bis x $\leq 400$ und besonders bevorzugt durchschnittlich x $\geq 8$ bis x $\leq 100$ Oxymethylen-Einheiten. Im Sinne der Erfindung werden unter einem Polyoxymethylen-Block auch solche Blöcke verstanden, welche geringe Anteile weiterer monomerer und/oder oligomerer Einheiten enthalten, im Allgemeinen weniger als 25 mol% bezogen auf die Gesamtmenge der im Block enthaltenen Monomereneinheiten.

Lösungsmittel

Im erfindungsgemäßen Verfahren enthält das Lösungsmittel keine OH-reaktiven funktionellen Gruppen sowie reagiert es nicht selbst mit OH-reaktiven Verbindungen.

In einer Ausführungsform des erfindungsgemäßen Verfahrens ist das in Schritt i) verwendete Lösungsmittel ein aprotisches Lösungsmittel.

In einer Ausführungsform des erfindungsgemäßen Verfahrens weist das aprotische Lösungsmittel eine Siedetemperatur von kleiner oder gleich 80 °C, bevorzugt kleiner oder gleich 70 °C und besonders bevorzugt kleiner oder gleich 60 °C bei 1 bara auf.

In einer Ausführungsform des erfindungsgemäßen Verfahrens ist das aprotische Lösungsmittel eine oder mehrere Verbindung(en) und wird ausgewählt aus der Gruppe bestehend aus aus n-Pentan, n-Hexan, n-Heptan, Petrolether, Kohlenstoffdisulfid, Kohlenstoffdioxid, Trichlorethylen, Methylenechlorid, Kolhenstofftetrachlorid, Chloroform, Trichlorfluormethan, Tetrabrommethan, Bromodichlormethan, Fluorbenzol, 1,4-Difluorobenzol, Dichlorfluormethan, Difluordichlormethan, Chlordifluormethan, Ethylacetat, Isopropylacetat, Methylformiat, Ethylformiat, Isopropylformiat, Propylformiat, Acetaldehydedimethylacetal, Acetonitril, Methyl-tert.-Butylether, tert-Butylethylether, tert.-Amylmethylether, Methylpropylether, sec. Butylmethylether, Butylmethylether, Methyl-n-propylether, 1-Ethoxypropan, 1,3-Dioxolan, 1,1-Dimethoxyethan, Diisopropylether, 2-Methyl-THF, 2,2 Dimethoxypropan, Dimethylether, Dimethoxymethan, Ethylmethylether, Diethylether, Diethoxymethan, Dimethoxyethan, Tetrahydrofuran (THF), 1,4,7,10-Tetraoxacyclododecan ([12]Krone-4), Aceton und Methylethylketon bevorzugt n-Pentan, n-Hexan, n-Heptan, Petrolether, Kohlenstoffdisulfid, Kohlenstoffdioxid, Ethylacetat, Methylformiat, Acetonitril, Methyl-tert.-Butylether, 1-Ethoxypropan, 1,3-Dioxolan, Acetaldehyddimethylacetal, Diisopropylether, 2-Methyl-THF, 2,2 Dimethoxypropan, Dimethylether, Dimethoxymethan, Ethylmethylether, Diethylether, Diethoxymethan, Dimethoxyethan, Tetrahydrofuran (THF), Aceton und Methylethylketon besonders bevorzugt n-Pentan, n -Hexan, Petrolether, Kohlenstoffdisulfid, Kohlenstoffdioxid, Methylformiat, Methyl-tert.-Butylether, 1-Ethoxypropan, Dimethoxyethan, Dimethylether, Dimethoxymethan, Ethylmethylether, Diethylether, Tetrahydrofuran (THF) und Aceton und ganz besonders bevorzugt n-Pentan, n -Hexan, Petrolether, Kohlenstoffdisulfid, Kohlenstoffdioxid, Methylformiat, Methyl-tert.-Butylether, Dimethoxyethan, Dimethylether, Dimethoxymethan, Ethylmethylether, Diethylether und Aceton.

OH-reaktive Verbindung

Im erfindungsgemäßen Verfahren weist die OH-reaktive Verbindung mindestens m OH-reaktive (funktionelle) Gruppen bevorzugt 2 oder 3 besonders bevorzugt 2 auf.

In einer Ausführungsform des erfindungsgemäßen Verfahrens ist die OH-reaktive Verbindung eine Dicarbonsäure, eine Tricarbonsäure, ein Dicarbonsäurechlorid, ein Tricarbonsäurechlorid, ein Dicarbonsäureazid, ein Tricarbonsäureazid, ein Dicarbonsäureanhydrid, ein Tricarbonsäureanhydrid, ein organisches Diazid, ein organisches Triazid, ein Diepoxid, ein Triepoxid, ein Halomethyloxiran, wie z.B. 1-Chlor-2,3-epoxypropan (Epichlorhydrin) oder 1-Brom-2,3-epoxypropan (Epibromohydrin), ein Diaziridin, ein Triaziridin, ein Disilylchlorid, ein Trisilylchlorid, ein Disilan, ein Trisilan, ein n-Alkyldi(magnesiumhalogenid), ein n-Alkyltri(magnesiumhalogenid), ein Disulfonylchlorid, ein Trisulfonylchlorid, ein organisches Di(chlorosulfite), ein organisches Tri(chlorosulfite),ein organisches Di(phosphordibromid), ein organisches Tri(phosphordibromid), Polythiocyanat und/oder ein Polyisocyanat bevorzugt ein Polyisocyanat.

In einer bevorzugten Ausführungsform des erfindungsgemäßen Verfahrens ist die OH-reaktive Verbindung ein Polyisocyanat und die Reaktion wird bei einem NCO-Index von $\geq$ 100 bis $\leq$ 5000 durchgeführt und ein NCO-terminiertes Präpolymer resultiert.

Dabei ist der NCO-Index definiert als prozentuales molares Verhältnis der NCO-Gruppen des Polyisocyanats zu den terminalen Hydroxylgruppen des polymeren Formaldehyds.

In einer Ausführungsform des erfindungsgemäßen Verfahrens ist das Polyisocyanat eine oder mehrere Verbindung(en) und wird ausgewählt aus der Gruppe bestehend aus 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diiso¬icyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Di-isocyanatodicyclohexylmethan (H12MDI), , 4-Isocyanatomethyl-1,8-octandiisocyanat (Triisocyanatononan, TIN), ω,ω'-Diisocyanato-1,3-dimethylcyclohexan (H6XDI), 1-Isocyanato-1-methyl-3-isocyanato-methyl¬cyclo¬¬hexan, 1-Isocyanato-1-methyl-4-isocyanato-methyl¬cyclo¬¬hexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4-Diisocyanatotoluol (TDI), 2,6-Diisocyanatotoluol (TDI)2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,5-Diisocyanatonaphthalin, 1,3-Bis(isocyanatomethyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate, bevorzugt 1,5-Diisocyanatopentan (PDI), ,6-Diisocyanatohexan (HDI), 1-Isocyanato-3,3,5-trimethyl-5-isocyanatomethylcyclohexan (Isophorondiisocyanat, IPDI), ,4'-Di-isocyanatodicyclohexylmethan (H12MDI), 2,4-Diisocyanatotoluol (TDI), 2,6-Diisocyanatotoluol (TDI)2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,3-Bis(isocyanato-methyl)benzol (XDI) deren Trimerisierungs- oder höheren Oligomerisierungsprodukte und/oder deren Addukte.

Im erfindungsgemäßen Verfahren erfolgt in Schritt ii) die Umsetzung der mindestens einen terminalen Hydroxylgruppe des Formaldehyd mit den mindestens zwei OH-reaktiven Gruppe, bevorzug zwei NCO-Gruppen, der OH-reaktiven Verbindung, bevorzugt eines Polyisocyanats. Diese Umsetzung kann in Gegenwart eines Katalysators oder ohne Katalysatorzusatz, bevorzugt ohne Katalysatorzusatz erfolgen.

In einer Ausführungsform des erfindungsgemäßen Verfahrens können zur Herstellung eines NCO-terminiertes Präpolymers durch Umsetzung von Formaldehyd mit einem Polyisocyanat Amin-basierte und/oder Metall-basierte Katalysatoren verwendet werden.

In einer Ausführungsform des erfindungsgemäßen Verfahrens ist der Amin-basierte Katalysator eine oder mehrere Verbindung(en) und wird ausgewählt aus der Gruppe bestehend aus *N,N,*-Dimethylethanolamin (DEMEA), *N,N*-Dimethylcyclohexylamin (DMCHEA), Triethylenediamin (DABCO), Dimethylcyclohexylamin, Bis(*N,N*-dimethylaminoethyl)ether (BDMAEE), Pentamethyldiethylentriamin (PMDETA), 2-(2-Dimethylaminoethoxy)ethanol (DMAEE), Dimorpholinodiethylether (DMDEE), *N*-Methyl-*N'*-(2-Dimethylaminoethyl)-piperazin, Diazabicicloundecen (DBU), DBU-

Phenat, Pentamethyldipropylentriamin, Bisdimethylaminoethylether und Pentamethyldiethylentriamin.

In einer Ausführungsform des erfindungsgemäßen Verfahrens ist der Metall-basierte Katalysator eine oder mehrere Verbindung(en) und wird ausgewählt aus der Gruppe bestehend aus Dibutylzinndilaurat (DBTDL), Zinn(II)2-ethylhexanoat, Methylzinnmercaptide, Phenylquechsilberpropionat und Blei(II)octaonat.

Schritte:

Das erfindungsgemäße Verfahren umfasst in Schritt i) die Herstellung einer Formaldehyd Lösung (a) durch Zugabe eines Lösungsmittels zu polymerem Formaldehyd in einem ersten Behälter, gefolgt von der Entnahme der in Schritt i) hergestellten Formaldehydlösung aus dem ersten Behälter und Überführung in einen zweiten OH-reaktive Verbindung enthaltenden Behälter unter Bildung einer Lösung (b);in Schritt ii) und der abschließenden destillativen Rückführung des Lösungsmittels aus dem zweiten Behälter in den ersten Behälter in Schritt iii).

Schritt i)

In einer Ausführungsform des erfindungsgemäßen Verfahrens wird in Schritt i) das Lösungsmittel diskontinuierlich oder kontinuierlich in den ersten Behälter bevorzugt kontinuierlich zugegeben.

In einer Ausführungsform des erfindungsgemäßen Verfahrens weist die Formaldehyd Lösung (a) in Schritt i) Temperaturen im ersten Behälter kleiner oder gleich 65 °C bevorzugt kleiner oder gleich 55 °C und besonders bevorzugt kleiner oder gleich 45 °C bei einem Druck von 0,1 bara bis 100 bara, bevorzugt von 1 bara bis 20 bara auf.

Schritt ii)

In einer Ausführungsform des erfindungsgemäßen Verfahrens wird die in Schritt ii) hergestellte Formaldehydlösung diskontinuierlich oder kontinuierlich bevorzugt kontinuierlich aus dem ersten Behälter entnommen.

Im erfindungsgemäßen Verfahren weist die Lösung (b) in Schritt ii) Temperaturen im zweiten Behälter kleiner oder gleich 80 °C bevorzugt kleiner oder gleich 70 °C und besonders bevorzugt kleiner oder gleich 60 °C auf, was eine Spaltung der eingesetzten Formaldehyd-Starterverbindungen in kleinere Polymere, Oligomere und Monomere sowie die Bildung von Neben- und Zersetzungsprodukten signifikant reduziert.

Darüber hinaus ist die Temperatur der Formaldehyd Lösung (a) im ersten Behälter in Schritt i) kleiner oder gleich als die Temperatur der Lösung (b) im zweiten Behälter.

Die Lösung (b) umfasst hierbei das Lösungsmittel, die OH-reaktive Verbindung sowie polymeres Formaldehyd als auch Reaktionsprodukte aus der OH-reaktiven Verbindung sowie der sowie polymeren Formaldehyd Verbindung. Beispielsweise resultieren Ester-Gruppen haltige Präpolymere durch Umsetzung des Hydroxylgruppen-haltigen polymeren Formaldehyds mit Carboxyl- oder Anhydridgruppen der OH-reaktiven Verbindung. In einer bevorzugten Ausführungsform resultieren Urethan-Gruppen haltige, NCO-terminierte Präpolymere durch Umsetzung des Hydroxylgruppen-haltigen polymeren Formaldehyds mit Isocyanatgruppen (NCO) des Polyisocyanats.

Die im ersten oder zweiten Behälter resultierenden Temperaturen der Formaldehyd Lösung (a) oder der Lösung (b) können mit verschiedenen geeigneten Temperaturmessgeräten bestimmt werden und somit auch die Beheizung des ersten oder zweiten Behälters geregelt werden oder sind bedingt durch die Siedetemperaturen der verwendeten Lösungsmittel unter Reaktionsbedingungen oder die Temperatur des in Schritt iii) destillativ rückgeführten Lösungsmittels.

In einer bevorzugten Ausführungsform weist die Lösung (b) in Schritt ii) Temperaturen im zweiten Behälter kleiner oder gleich 80 °C bevorzugt kleiner oder gleich 70 °C und besonders bevorzugt kleiner oder gleich 60 °C bei einem Druck von 0,1 bara bis 100 bara, bevorzugt von 1 bara bis 20 bara auf.

In einer Ausführungsform des erfindungsgemäßen Verfahrens durchläuft Formaldehyd-Lösung (a) in Schritt ii) während der Überführung vom ersten in den zweiten Behälter einen Filter, wobei dieser Schritt ebenfalls kontinuierlich als auch diskontinuierlich erfolgen kann.

Schritt iii)

In einer Ausführungsform des erfindungsgemäßen Verfahrens wird in Schritt iii) das Lösungsmittel diskontinuierlich oder kontinuierlich bevorzugt kontinuierlich aus dem zweiten Behälter in den ersten Behälter zurückgeführt, wodurch der Lösungsmittelbedarf reduziert wird.

Im erfindungsgemäßen Verfahren ist unter einer kontinuierlichen Fahrweise der Schritte i), ii) und iii) sowie der Zuführung der Edukte, Entnahme der Produkte, Überführung, und/oder Rückführung ein Volumenstrom von > 0 mL/min zu verstehen, wobei der Volumenstrom während konstant sein kann oder variiert. Unter einer diskontinuierlichen Fahrweise sind hingegen auch Volumenströme von 0 mL/min zu verstehen. Eine Ausführungsform für die diskontinuierliche Fahrweise stellt die stufenweise Ausführung der Schritt i), ii) und ii) sowie der Zuführung der Edukte, Entnahme der Produkte, Überführung, und/oder Rückführung dar. In einer Ausführungsform des erfindungsgemäßen Verfahrens kann im zweiten Behälter nicht reagierte OH-reaktive Verbindung, bevorzugt Polyisocyanat aus der Lösung (b) entfernt werden, so dass das Präpolymer resultiert. Bevorzugt wird diese Entfernung destillativ durchgeführt.

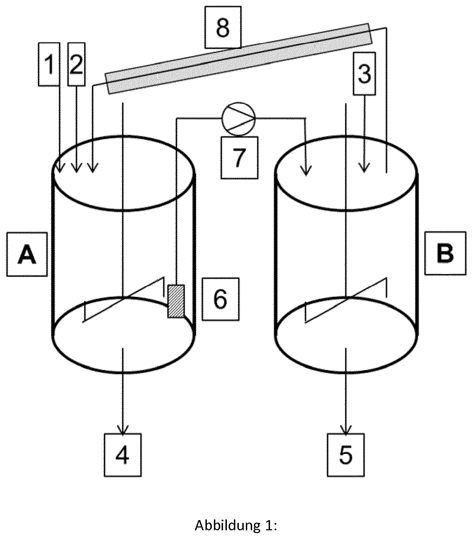

In Abbildung 1 ist ein Beispiel für eine technische Ausführungsform für das erfindungsgemäße Verfahren, dargestellt umfassend die Schritte

i) einen ersten Behälter (A) zur Herstellung einer Formaldehyd Lösung (a) durch kontinuierliche oder diskontinuierliche Zugabe eines Lösungsmittels (1) zu polymerem Formaldehyd (2),

ii) der kontinuierlichen oder diskontinuierlichen Entnahme der hergestellten Formaldehydlösung (a) aus dem ersten Behälter und Überführung (7) optional unter Anwendung einer Filtration 6) in einen zweiten OH-reaktive Verbindung optional Katalysator (3) enthaltenden Behälter (B) unter Bildung einer Lösung (b),

iii) sowie die kontinuierliche oder diskontinuierliche destillative Rückführung des Lösungsmittels (8) aus dem zweiten Behälter (B) in den ersten Behälter (A).

Die Entnahme des Produktgemisches (5) umfassend das Präpolymer umfassend Polyoxymethylen-Block sowie optional der unreagierten, OH-reaktiven Verbindung erfolgt dabei mit und ohne Lösungsmittel. Die Entnahme der Formaldehyd-Lösung (a), polymerem Formaldehyd und/oder Lösungsmittel (4) aus dem ersten Behälter (A) wie auch die Entnahme des Produktgemisches (5) mit und ohne Lösungsmittel aus dem zweiten Behälter (B) können diskontinuierlich als auch kontinuierlich erfolgen. Auch die Zugabe von Lösungsmittel (1), Formaldehyd (2) in den ersten Behälter (A) als auch die Zugabe OH-reaktiver Verbindung wie auch des Katalysators (3) können diskontinuierlich als auch kontinuierlich erfolgen.

Weiterhin erfolgt eine unabhängige Temperierung von Behälter A und B. Zudem kann der Druck des Gesamtsystems eingestellt bzw. geregelt werden. Es kann durch Leistungseintrag gemischt werden, wie z.B. durch mechanische Rührorgane. Die Behälter A und B können jegliche verfahrenstechnischen Apparate sein und sind nicht auf Rührkessel beschränkt.

Ein weiterer Gegenstand der vorliegenden Erfindung sind Polyoxymethylen-Blockcopolymer, bevorzugt ein NCO-terminiertes Präpolymer, erhältlich durch das erfindungsgemäße Verfahren mit einer zahlenmittleren Anzahl an Polyoxymethylenwiederholungseinheiten von 2 bis 50 bevorzugt 4 bis 30 und besonders bevorzugt von 8 bis 20 beträgt, wobei die Anzahl an Polyoxymehylenwiederholungseinheiten mittels Protonenresonanzspektroskopie bestimmt wurde.

In einer Ausführungsform ist das Präpolymer umfassend Polyoxymethylen-Block ein NCO-terminiertes Präpolymer mit einem Gehalt an reaktiven Isocyanatgruppen von $\geq 4$ Gew.-% bis $\leq 25$ Gew.-% bezogen auf das Präpolymer umfassend Polyoxymethylen-Block der Isocyanatgruppen im Präpolymer umfassend Polyoxymethylen-Block, wobei der Gehalt an reaktiven Isocyanatgruppen mittels Derivatisierung mit Methanol NMR-spektroskopisch bestimmt wurde..

Mischung

Ein weiterer Gegenstand der vorliegenden Erfindung sind Mischungen umfassend die erfindungsgemäßen Polyoxymethylen-Blockcopolymere, bevorzugt die NCO-terminierten Präpolymere sowie die erfindungsgemäßen OH-reaktiven Verbindung, bevorzugt Polyisocyanate.

In einer Ausführungsform weist die erfindungsgemäße Mischung einen Gehalt an reaktiven Isocyanatgruppen von $\geq 4$ Gew.-% bis $\leq 50$ Gew.-% bezogen auf den Gesamtanteil der Isocyanatgruppen auf, wobei der Gehalt an reaktiven Isocyanatgruppen mittels Derivatisierung mit Methanol NMR-spektroskopisch bestimmt wurde.

Die nach dem erfindungsgemäßen Verfahren erhältlichen Polyoxymethylen-Blockcopolymere bevorzugt ein NCO-terminiertes Präpolymer können problemlos verarbeitet werden. Im Falle erfindungsgemäßen NCO-terminiertes Präpolymere oder der erfindungsgemäßen Mischungen umfassend Polyisocyanate und erfindungsgemäße NCO-terminierte Präpolymere können diese mit den mindestens zwei NCO-reaktiven Gruppen von NCO-reaktiven Verbindungen umgesetzt werden. Im Falle von Hydroxylgruppen als NCO-reaktiven Gruppen resultieren Polyurethane oder Polyisocyanurate, insbesondere Polyurethan-Thermoplasten, Polyurethan-Beschichtungen, -Fasern, -Elastomeren, -Klebstoffen sowie insbesondere auch Polyurethan-Schaumstoffen eingeschlossen Weich- (wie beispielsweise Polyurethan-Weichblockschaumstoffe und Polyurethan-Weichformschaumstoffe) und Hartschäume.

Für Polyurethananwendungen werden vorzugsweise Polyoxymethylen-Blockcopolymere eingesetzt, welche eine Funktionalität von mindestens 2 aufweisen. Des Weiteren können die nach dem erfindungsgemäßen Verfahren erhältlichen Polyoxymethylen-Blockcopolymere in Anwendungen wie Wasch- und Reinigungsmittelformulierungen, Klebstoffen, Farben, Lacken, Funktionsfluiden, Bohrflüssigkeiten, Kraftstoffadditiven, ionischen und nicht-ionischen Tensiden, Schmiermitteln, Prozesschemikalien für die Papier- oder Textilherstellung oder kosmetischen / medizinischen Formulierungen verwendet werden. Dem Fachmann ist bekannt, dass abhängig vom jeweiligen Anwendungsgebiet die zu verwendenden Polymere gewisse Stoffeigenschaften wie beispielsweise Molekulargewicht, Viskosität, Polydispersität, Funktionalität und/oder Hydroxylzahl (Anzahl an terminalen Hydroxy-Gruppen pro Molekül) erfüllen müssen.

Die Erfindung betrifft daher ebenfalls die Verwendung von erfindungsgemäßen Präpolymer umfassend Polyoxymethylen-Blockzur Herstellung von Polyurethan-Polymeren. In einer Ausführungsform dieser Verwendung sind die Polyurethan-Polymere Polyurethan-Weichschaumstoffe oder Polyurethan-Hartschaumstoffe. In einer weiteren Ausführungsform dieser Verwendung sind die Polyurethan-Polymere thermoplastische Polyurethan-Polymere.

Gegenstand der Erfindung ist daher ebenfalls ein Polyurethan-Polymer, erhältlich durch Umsetzung eines einer NCO-reaktiven Verbindung enthaltend mindestens zwei terminale Hydroxylgruppen als NCO-reaktiven Gruppen mit wenigstens einem erfindungsgemäßen Präpolymer umfassend Polyoxymethylen-Blockbevorzugt NCO-terminierten Präpolymer.

Gegenstand der Erfindung ist ebenfalls ein Polyurethan-Weichschaumstoff oder ein Polyurethan-Hartschaumstoff erhältlich durch Umsetzung eines einer NCO-reaktiven Verbindung enthaltend mindestens zwei terminale Hydroxylgruppen als NCO-reaktiven Gruppen mit wenigstens einem erfindungsgemäßen Präpolymer umfassend Polyoxymethylen-Block bevorzugt NCO-terminierten Präpolymer.

Erfindungsgemäß eingeschlossen ist auch die Verwendung von Präpolymer umfassend Polyoxymethylen-Block gemäß der vorliegenden Erfindung zur Herstellung von Polyurethanen, Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen.

Ein weiterer erfindungsgemäßer Gegenstand ist ein chemisch-technisches Verfahren zur Herstellung eines Produktes definierter Zusammensetzung umfassend folgende Schritte:

i) Herstellung einer Edukt-Lösung (1) durch Zugabe eines Lösungsmittels (1) zu einem Edukt (1), welches eine Löslichkeit von < 1g/L besitzt und dessen Schmelzpunkt höher oder gleich seinem Zersetzungspunkt ist, in einem ersten Behälter,

ii) Entnahme der in Schritt i) hergestellten Edukt-Lösung (1) aus dem ersten Behälter und Überführung in einen zweiten, eine Edukt (1) reaktive Verbindung enthaltenden Behälter unter Bildung einer das Produkt enthaltenden Lösung (2),

iii) Destillative Rückführung des Lösungsmittels (1) aus dem zweiten Behälter in den ersten Behälter,

wobei die das Produkt enthaltende Lösung (2) in Schritt ii) eine Temperatur im zweiten Behälter kleiner oder gleich 150 °C bevorzugt kleiner oder gleich 130 °C und besonders bevorzugt kleiner oder gleich 110 °C aufweist;
wobei die Temperatur im ersten Behälter in Schritt i) kleiner oder gleich als die Temperatur im zweiten Behälter ist;
und wobei das Lösungsmittel (1) nicht mit dem Edukt (1), der Edukt (1)-reaktiven Verbindung und dem Produkt reagiert.

Bevorzugt die thermische Stabilität des Produktes höher ist als des Edukts (1)

Hierbei ist das erfindungsgemäße Edukt (1) eine oder mehrere Verbindungen und ausgewählt aus der Klasse von organischen Verbindungen oder Metall-organischen Verbindungen.

Bevorzugt besitzt das erfindungsgemäße Edukt (1) eine thermische Stabilität oberhalb der Siedetemperatur des Lösungsmittels (1) unter Prozessbedingungen.

In einer Ausführungsform des erfindungsgemäßen Verfahrens wird in Schritt i) das Lösungsmittel (1) diskontinuierlich oder kontinuierlich in den ersten Behälter bevorzugt kontinuierlich zugegeben.

In einer Ausführungsform des erfindungsgemäßen Verfahrens wird die in Schritt ii) hergestellte hergestellten Edukt-Lösung (1) diskontinuierlich oder kontinuierlich bevorzugt kontinuierlich aus dem ersten Behälter entnommen.

In einer Ausführungsform des erfindungsgemäßen Verfahrens wird in Schritt iii) das Lösungsmittel (1) diskontinuierlich oder kontinuierlich bevorzugt kontinuierlich aus dem zweiten Behälter in den ersten Behälter zurückgeführt wird, wodurch der Lösungsmittelbedarf reduziert wird.

In Abbildung 1 ist ein Beispiel für eine technische Ausführungsform für das erfindungsgemäße chemisch-technisches Verfahren zur Herstellung eines Produktes definierter Zusammensetzung, dargestellt umfassend die Schritte

i) einen ersten Behälter (A) zur Herstellung einer Edukt Lösung durch kontinuierliche oder diskontinuierliche Zugabe eines Lösungsmittels (1) zu einem Edukt, welches durch Öffnung (1) in Behälter (A) gegeben wird, eine Löslichkeit von < 1g/L besitzt und dessen Schmelzpunkt höher oder gleich seinem Zersetzungspunkt ist, in einem ersten Behälter,,

ii) der kontinuierlichen oder diskontinuierlichen Entnahme der in Schritt i) hergestellten Edukt-Lösung aus dem ersten Behälter (A) und Überführung (7) optional unter Anwendung einer Filtration (6) in einen zweiten eine Edukt-reaktive Verbindung (3) enthaltenden Behälter (B) optional enthaltend einen Katalysator unter Bildung einer das Produkt enthaltenden Lösung,

iii) sowie die kontinuierliche oder diskontinuierliche destillative Rückführung des Lösungsmittels (8) aus dem zweiten Behälter (B) in den ersten Behälter (A).

Die Entnahme des Produktgemisches (5) umfassend das Produkt sowie optional der unreagierten, Edukt-reaktiven Verbindung erfolgt dabei mit und ohne Lösungsmittel. Die Entnahme der Edukt-Lösung, des Edukts und/oder Lösungsmittel (4) aus dem ersten Behälter (A) wie auch die Entnahme des Produktgemisches (5) mit und ohne Lösungsmittel aus dem zweiten Behälter (B) können diskontinuierlich als auch kontinuierlich erfolgen. Auch die Zugabe von Lösungsmittel (1), Eukt (2) in den ersten Behälter (A) als auch die Zugabe Edukt-reaktiver Verbindung (3) wie auch des optional eines Katalysators können diskontinuierlich als auch kontinuierlich erfolgen.

In einer ersten Ausführung betrifft die Erfindung ein Verfahren zur Herstellung eines Präpolymers umfassend einen Polyoxymethylen-Block, wobei das Verfahren folgende Schritte umfasst:

i) Herstellung einer Formaldehyd Lösung (a) durch Zugabe eines Lösungsmittels zu polymerem Formaldehyd in einem ersten Behälter;

ii) Entnahme der in Schritt i) hergestellten Formaldehydlösung aus dem ersten Behälter und Überführung in einen zweiten OH-reaktive Verbindung enthaltenden Behälter unter Bildung einer das Präpolymer enthaltenden Lösung (b);

iii) Destillative Rückführung des Lösungsmittels aus dem zweiten Behälter in den ersten Behälter;

wobei das Formaldehyd m terminale Hydroxylgruppen aufweist;
wobei m eine natürliche Zahl von zwei oder mehr ist,
wobei die OH-reaktive Verbindung m oder mehr terminale OH-reaktive Gruppen aufweist;
wobei das Lösungsmittel keine OH-reaktiven funktionellen Gruppen enthält sowie selbst nicht mit OH-reaktiven Verbindungen reagiert;
wobei die Lösung (b) in Schritt ii) eine Temperatur im zweiten Behälter kleiner oder gleich 80 °C bevorzugt kleiner oder gleich 70 °C und besonders bevorzugt kleiner oder gleich 60 °C aufweist;
und wobei die Temperatur der Formaldehyd Lösung (a) im ersten Behälter in Schritt i) kleiner oder gleich als die Temperatur der Lösung (b) im zweiten Behälter ist.

In einer zweiten Ausführung betrifft die Erfindung ein Verfahren gemäß der ersten Ausführung, wobei in Schritt i) das Lösungsmittel diskontinuierlich oder kontinuierlich in den ersten Behälter zugegeben wird.

In einer dritten Ausführung betrifft die Erfindung ein Verfahren gemäß der ersten oder zweiten Ausführung, wobei die in Schritt ii) hergestellte Formaldehydlösung diskontinuierlich oder kontinuierlich aus dem ersten Behälter entnommen wird.

In einer vierten Ausführung betrifft die Erfindung ein Verfahren gemäß einer der ersten bis dritten Ausführung, wobei in Schritt iii) das Lösungsmittel diskontinuierlich oder kontinuierlich aus dem zweiten Behälter in den ersten Behälter zurückgeführt wird.

In einer fünften Ausführung betrifft die Erfindung ein Verfahren einer der ersten bis vierten Ausführung, wobei das in Schritt i) verwendete Lösungsmittel ein aprotisches Lösungsmittel ist.

In einer sechsten Ausführung betrifft die Erfindung ein Verfahren gemäß der fünften Ausführung, wobei das aprotische Lösungsmittel eine Siedetemperatur von kleiner oder gleich 80 °C, bevorzugt kleiner oder gleich 70 °C und besonders bevorzugt kleiner oder gleich 60 °C bei 1 bara aufweist.

In einer siebten Ausführung betrifft die Erfindung ein Verfahren gemäß der fünften oder sechsten Ausführung, wobei das aprotische Lösungsmittel eine oder mehrere Verbindung(en) ist und ausgewählt wird aus der Gruppe bestehend aus n-Pentan, n-Hexan, n-Heptan, Petrolether, Kohlenstoffdisulfid, Kohlenstoffdioxid, Trichlorethylen, Methylenechlorid, Kolhenstofftetrachlorid, Chloroform, Trichlorfluormethan, Tetrabrommethan, Bromodichlormethan, Fluorbenzol, 1,4-Difluorobenzol, Dichlorfluormethan, Difluordichlormethan, Chlordifluormethan, Ethylacetat, Isopropylacetat, Methylformiat, Ethylformiat, Isopropylformiat, Propylformiat, Acetaldehydedimethylacetal, Acetonitril, Methyl-tert.-Butylether, tert-Butylethylether, tert.-Amylmethylether, Methylpropylether, sec. Butylmethylether, Butylmethylether, Methyl-n-propylether, 1-Ethoxypropan, 1,3-Dioxolan, 1,1-Dimethoxyethan, Diisopropylether, 2-Methyl-THF, 2,2 Dimethoxypropan, Dimethylether, Dimethoxymethan, Ethylmethylether, Diethylether, Diethoxymethan, Dimethoxyethan, Tetrahydrofuran (THF), 1,4,7,10-Tetraoxacyclododecan ([12]Krone-4), Aceton und Methylethylketon bevorzugt n-Pentan, n-Hexan, n-Heptan, Petrolether, Kohlenstoffdisulfid, Kohlenstoffdioxid, Ethylacetat, Methylformiat, Acetonitril, Methyl-tert.-Butylether, 1-Ethoxypropan, 1,3-Dioxolan, Acetaldehyddimethylacetal, Diisopropylether, 2-Methyl-THF, 2,2 Dimethoxypropan, Dimethylether, Dimethoxymethan, Ethylmethylether, Diethylether, Diethoxymethan, Dimethoxyethan, Tetrahydrofuran (THF), Aceton und Methylethylketon besonders bevorzugt n-Pentan, n -Hexan, Petrolether, Kohlenstoffdisulfid, Kohlenstoffdioxid, Methylformiat, Methyl-tert.-Butylether, 1-Ethoxypropan, Dimethoxyethan, Dimethylether, Dimethoxymethan, Ethylmethylether, Diethylether, Tetrahydrofuran (THF) und Aceton und ganz besonders bevorzugt n-Pentan, n -Hexan, Petrolether, Kohlenstoffdisulfid, Kohlenstoffdioxid, Methylformiat, Methyl-tert.-Butylether, Dimethoxyethan, Dimethylether, Dimethoxymethan, Ethylmethylether, Diethylether und Aceton.

In einer achten Ausführung betrifft die Erfindung ein Verfahren gemäß einer der ersten bis siebten Ausführung, wobei die OH-reaktive Verbindung eine Dicarbonsäure, eine Tricarbonsäure, ein Dicarbonsäurechlorid, ein Tricarbonsäurechlorid, ein Dicarbonsäureazid, ein Tricarbonsäureazid, ein Dicarbonsäureanhydrid, ein Tricarbonsäureanhydrid, ein organisches Diazid, ein organisches Triazid, ein Diepoxid, ein Triepoxid, ein Halomethyloxiran, wie z.B. 1-Chlor-2,3-epoxypropan (Epichlorhydrin) oder 1-Brom-2,3-epoxypropan (Epibromohydrin), ein Diaziridin, ein Triaziridin, ein Disilylchlorid, ein Trisilylchlorid, ein Disilan, ein Trisilan, ein n-Alkyldi(magnesiumhalogenid), ein n-Alkyltri(magnesiumhalogenid), ein Disulfonylchlorid, ein Trisulfonylchlorid, ein organisches Di(chlorosulfite), ein organisches Tri(chlorosulfite),ein organisches Di(phosphordibromid), ein organisches Tri(phosphordibromid), Polythiocyanat und/oder ein Polyisocyanat bevorzugt ein Polyisocyanat.

In einer neunten Ausführung betrifft die Erfindung ein Verfahren gemäß der achten Ausführung, wobei die OH-reaktive Verbindung ein Polyisocyanat ist und die Reaktion bei einem NCO-Index von $\geq$ 100 bis $\leq$ 5000 durchgeführt wird und ein NCO-terminiertes Präpolymer resultiert.

In einer zehnten Ausführung betrifft die Erfindung ein Verfahren gemäß der neunten Ausführung, wobei das Polyisocyanat eine oder mehrere Verbindung(en) ist und ausgewählt wird aus der Gruppe bestehend aus 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diiso¬cyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Di-isocyanatodicyclohexylmethan (H12MDI), , 4-Isocyanatomethyl-1,8-octandiisocyanat (Triisocyanatononan, TIN), $\omega,\omega'$-Diisocyanato-1,3-dimethylcyclohexan (H6XDI), 1-Isocyanato-1-methyl-3-isocyanato-methyl¬cyclo¬¬hexan, 1-Isocyanato-1-methyl-4-isocyanatomethyl¬cyclo¬hexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4-Diisocyanatotoluol (TDI), 2,6-Diisocyanatotoluol (TDI)2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,5-Diisocyanatonaphthalin, 1,3-Bis(isocyanatomethyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate, bevorzugt 1,5-Diisocyanatopentan (PDI), ,6-Diisocyanatohexan (HDI), 1-Isocyanato-3,3,5-trimethyl-5-isocyanatomethylcyclohexan (Isophorondiisocyanat, IPDI), ,4'-Di-isocyanatodicyclohexylmethan (H12MDI), 2,4-Diisocyanatotoluol (TDI), 2,6-Diisocyanatotoluol (TDI)2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,3-Bis(isocyanato-methyl)benzol (XDI) deren Trimerisierungs- oder höheren Oligomerisierungsprodukte und/oder deren Addukte.

In einer elften Ausführung betrifft die Erfindung ein Präpolymer umfassend Polyoxymethylen-Block nach einem der vorherigen Ansprüche, bevorzugt ein NCO-terminiertes Präpolymer gemäß der neunten oder zehnten Ausführung erhältlich mit einer zahlenmittleren Anzahl an Polyoxymethylenwiederholungseinheiten von 2 bis 50 bevorzugt 4 bis 30 und besonders bevorzugt von 8 bis 20 beträgt, wobei die Anzahl an Polyoxymehylenwiederholungseinheiten mittels Protonenresonanzspektroskopie bestimmt wurde.

In einer zwölften Ausführung betrifft die Erfindung ein Präpolymer umfassend Polyoxymethylen-Block, der elften Ausführung, wobei das Präpolymer umfassend Polyoxymethylen-Block ein NCO-terminiertes Präpolymer ist mit einem Gehalt an reaktiven Isocyanatgruppen von $\geq$ 4 Gew.-% bis $\leq$25 Gew.-% bezogen auf das Präpolymer umfassend Polyoxymethylen-Block der Isocyanatgruppen im Präpolymer umfassend Polyoxymethylen-Block, wobei der Gehalt an reaktiven Isocyanatgruppen mittels Derivatisierung mit Methanol NMR-spektroskopisch bestimmt wurde.

In einer dreizehnten Ausführung betrifft die Erfindung eine Mischung umfassend ein Präpolymer umfassend Polyoxymethylen-Blockgemäß elften oder zwölften Ausführung sowie eine OH-reaktive Verbindung, bevorzugt Polyisocyanat gemäß eine der neunten bis elften Ausführung.

In einer vierzehnten Ausführung betrifft die Erfindung ein Mischung gemäß der dreizehnten Ausführung, wobei die Mischung einen Gehalt an reaktiven Isocyanatgruppen von $\geq$ 4 Gew.-% bis $\leq$50 Gew.-% bezogen auf den Gesamtanteil der Isocyanatgruppen aufweist, wobei der Gehalt an reaktiven Isocyanatgruppen mittels Derivatisierung mit Methanol NMR-spektroskopisch bestimmt wurde.

In einer fünfzehnten Ausführung betrifft die Erfindung ein chemisch-technisches Verfahren Verfahrenzur Herstellung eines Produktes definierter Zusammensetzung umfassend folgende Schritte:

i) Herstellung einer Edukt-Lösung (1) durch Zugabe eines Lösungsmittels (1) zu einem Edukt (1), welches eine Löslichkeit von < 1g/L besitzt und dessen Schmelzpunkt höher oder gleich seinem Zersetzungspunkt ist, in einem ersten Behälter,

ii) Entnahme der in Schritt i) hergestellten Edukt-Lösung (1) aus dem ersten Behälter und Überführung in einen zweiten, eine Edukt (1) reaktive Verbindung enthaltenden Behälter unter Bildung einer das Produkt enthaltenden Lösung (2),

iii) Destillative Rückführung des Lösungsmittels (1) aus dem zweiten Behälter in den ersten Behälter,

wobei die das Produkt enthaltende Lösung (2) in Schritt ii) eine Temperatur im zweiten Behälter kleiner oder gleich 150 °C bevorzugt kleiner oder gleich 130 °C und besonders bevorzugt kleiner oder gleich 110 °C aufweist;

wobei die Temperatur im ersten Behälter in Schritt i) kleiner oder gleich als die Temperatur im zweiten Behälter ist;

und wobei das Lösungsmittel (1) nicht mit dem Edukt (1), der Edukt (1)-reaktiven Verbindung und dem Produkt reagiert.

## Beispiele

## Eingesetzte Verbindungen:

pFA-1: Paraformaldehyd (Markennamen: Granuform® 91 (Formaldehydgehalt laut Hersteller 89.5 - 92.5%), INEOS Paraform GmbH & Co. KG).

pFA-2: Paraformaldehyd (Granuform® M, (Formaldehydgehalt laut Hersteller jeweils 94.5 - 96.5%), INEOS Paraform GmbH & Co. KG).

Dimethoxymethan, DMM (99.9%, Sigma-Aldrich Chemie GmbH, über $CaH_2$ getrocknet, destilliert und über 4 A Molsieb gelagert)

HDI (Desmodur H, > 99%, Covestro Deutschland AG, keine Vorbehandlung)

TDI (Desmodur T 100, Toluol-2,4-diisocyanat, > 99%, Covestro Deutschland AG, keine Vorbehandlung)

IPDI (Isophorone Diisocyanate, 98%, Sigma-Aldrich Chemie GmbH, keine Vorbehandlung)

n-Pentan (> 99%, Sigma-Aldrich Chemie GmbH, destilliert und über 3 A Molsieb gelagert)

Methanol (99.8%, Sigma-Aldrich Chemie GmbH, getrocknet über 3 A Molsieb)

$CDCL_3$ (99.80% D, Euriso-Top GmbH, getrocknet über 4 A Molsieb)

DMSO-d6 (99.80% D, Euriso-Top GmbH, getrocknet über 4 Ä Molsieb)

$CH_2Cl_2$ (> 99.8%, Sigma-Aldrich Chemie GmbH, getrocknet über 4 Ä Molsieb)

## Methodenbeschreibung:

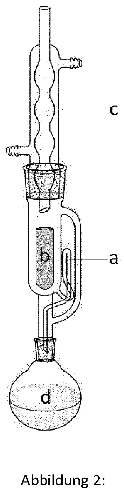

**Reaktiv-Soxhlet-Extraktion:** Zur kontinuierlichen Herstellung des NCO-terminierten Präpolymers umfassend einen Polyoxymethylen-Block kann eine Labor-Apparatur gemäß Abbildung 2 verwendet werden, die aus einem Kolben (zweiter Behälter, (vgl. Abbildung 2 (c))) enthaltend das Lösungsmittel sowie die OH-reaktive Verbindung, einem Extraktionsaufsatz (Soxhlet-Extraktor, erster Behälter, vgl. Abbildung 2 (a)) und einem Rückflusskühler besteht. Im Soxhlet-Extraktor befindet sich eine feste Extraktionshülse aus Zellstoff, die die polymere Formaldehydverbindung als den zu extrahierenden Feststoff enthält. Das im Kolben befindliche Lösungsmittel wird teilweise verdampft; das Kondensat füllt kontinuierlich Extraktor und Extraktionshülse, wobei sich lösliche Bestandteile im Lösungsmittel anreichern. Sobald die Lösung im Soxhlet-Extraktor einen Füllstand erreicht, der durch einen seitlich angebrachten Siphon (Saugheber) vorgegeben ist, entleert sich der Extraktor schlagartig in den darunterliegenden Rundkolben (zweiter Behälter). Dort wird das Lösungsmittel von den löslichen Bestandteilen abdestilliert, steigt durch den Soxhlet-Extraktor, kondensiert im Rückflusskühler (vgl. Abbildung 2 (c)) und läuft in Extraktor bzw. die Extraktionshülse (vgl. Abbildung 2 (b)). Auf diese Weise wird das Lösungsmittel über einen längeren Zeitraum recyclisiert, wobei immer eine kleine Menge löslicher Bestandteile des Feststoffs in den unteren Kolben überführt werden (vgl. E. Fanghänel: Organikum, 22 Aufl., WILEY-VHC Verlag GmbH, Weinheim, 2004, S. 54f). Im unteren Kolben wird der extrahierte Feststoff mit einem Reaktionspartner (z.B. OH-reaktiver Verbindung) umgesetzt werden, d.h. eine spezielle Form der Kombination aus Extraktion und Reaktion ausgeführt werden. Dabei wird die Umsetzung des extrahierten Stoffes mit den OH-reaktiven Verbindungen mit und ohne Katalysator durchgeführt. Eine mögliche technische Ausführungsform dieser speziellen Form der Reaktiv-Soxhlet-Extraktion ist in Abbildung 2 dargestellt.

**¹H-NMR-Spektroskopie:** Die Messungen erfolgten auf einem Bruker AV400 (400 MHz); die Kalibrierung der chemischen Verschiebungen erfolgte relativ zum Restprotonensignal (CDCl₃: $\delta$ ¹H = 7.26 ppm, DMSO-d6: $\delta$ ¹H = 2.50 ppm); die Multiplizität der Signale wurde wie folgt angegeben: s = Singulett, m = Multiplett, b = verbreitertes Signal, kb = komplexer Bereich (überlagerte Multipletts).

**¹³C-NMR-Spektroskopie:** Die Messungen erfolgten auf einem Bruker AV400 (100 MHz); die Kalibrierung der chemischen Verschiebungen erfolgte relativ zum Lösungsmittelsignal (CDCl₃: $\delta$ ¹³C = 77.16 ppm, DMSO-d6: $\delta$ ¹³C = 39.52 ppm);

**Polyoxymethylengruppengehalt:** Der Gehalt an Polyoxymethylengruppen n im NCO-Präpolymer wurde mit Hilfe von ¹H-NMR Spektroskopie bestimmt. Die relativen Gehalte der einzelnen Gruppen wurden dabei über Integration der charakteristischen Protonensignale bestimmt. Die charakteristischen Signale der Polyoxymethylengruppen in direkter Nachbarschaft zur Carbamateinheit ($\delta$¹H 5.34, 4H, OCH₂*) sind gegenüber denen der internen Polyoxymethylengruppen ($\delta$¹H 4.83, n H, OCH₂) zu tiefem Feld verschoben. Nachdem das Integral des OCH₂*-Signals auf vier normiert wurde, lässt sich der Gehalt an Polyoxymethylengruppen $n$ im NCO Präpolymer über folgende Formel berechnen:

$$n = \frac{\text{Integral}(\text{OCH}_2) + 4}{2}$$

Charakteristische Protonen-Signale der Polyoxymethylengruppen in direkter Nachbarschaft zur Carbamateinheit korrelieren mit den ¹³C-NMR Signalen der Carbamat-C=O-Einheiten:
¹H/¹³C HMBC-NMR (400/100 MHz, DMSO-d6, 298 K; ausgewählte Kreuzresonanz) $\delta$¹H/ $\delta$¹³C [ppm]: 5.34/153.07 (4H, OCH₂*/C=O).

**NCO-Gehaltsbestimmung mittels Isocyanat-Derivatisierung mit MeOH:** Zur Bestimmung der NCO-Gehalte wurden die reaktiven NCO-Gruppen der Präpolymere zunächst mit Methanol im Überschuss zu den entsprechenden Carbamat-Spezies derivatisiert. Das Produktgemisch wurde großteilig von Lösungsmittel befreit und mit einem Überschuss trockenem Methanol versetzt und 2 h bei 60 °C gerührt. Nach gründlicher Entfernung des überschüssigen Methanols im Hochvakuum wurde der NCO-Gehalt über Integration der charakteristischen Protonensignale der terminalen Methoxygruppen (-OMe) NMR-spektroskopisch bestimmt. Dazu wurden 40 mg des Präpolymers in 0.5 mL DMSO-d6 gelöst und mit einer definierten Menge trockenem Dichlormethan als Standard (Integral = 1) versetzt. Von diesem Gemisch wurde ein ¹H-NMR-Spektrum mit 64 Scans aufgenommen, die Verhältnisse der entsprechenden Fragmente (-OMe [$\delta$¹H 3.80-3.45ppm], CH₂Cl₂ [$\delta$¹H 5.76 ppm]) durch Integration bestimmt und der NCO-Gehalt über folgende Formel berechnet:

$$NCO\ Gehalt[\%] = \frac{\left(\frac{Integral(OMe)}{1.5x\ Integral(DCM)}\right) x\ mmol\ DCM}{mg\ Probe} x\ MW_{NCO\ Gruppe}\ x\ 100$$

**Beispiel 1: Umsetzung von pFA-2 (INEOS, Granuform® M) mit DMM und Toluol-2,4-diisocyanat (TDI) mittels Reaktiv-Soxhlet-Extraktion**

Paraformaldehyd pFA-2 (Granuform® M, 10.5 g) wurde in der Extraktionshülse eines Soxhlet-Extraktors vorgelegt. Durch Soxhlet-Extraktion mit Dimethoxymethan (kurz DMM) als Lösungsmittel (200 mL) wurde polymeres Formaldehyd unter Rückfluss (60 °C Ölbadtemperatur) extrahiert und im darunter liegenden Kolben mit einem Überschuss TDI zur Reaktion gebracht (12,1 g). Nach 66 Stunden Extraktionszeit wurde das Lösungsmittel unter vermindertem Druck entfernt und der Rückstand mit getrocknetem $n$-Pentan gewaschen und das Reaktionsprodukt als farbloser Feststoff erhalten.

Laut ¹H NMR Spektrum verfügt das gewonnene NCO-terminierte Präpolymer durchschnittlich über 12 Oxymethyleneinheiten und das daraus berechnete Molgewicht (MW_ber.) beträgt somit 726.7 g/mol. Die Anwesenheit von Urethangruppen wurde durch charakteristische Kreuzresonanzen im ¹H/¹³C HMBC-NMR Spektrum festgestellt. Charakteristische Banden im IR Spektrum zeigen die Anwesenheit von NCO- und Carbamat-Funktionalitäten. Die NCO-Gehaltsbestimmung erfolgte mittels Derivatisierung der freien Isocyanat-Gruppen mit MeOH und durch anschließende Integration charakteristischer Signale im ¹H NMR Spektrum.

Charakterisierung:
**¹H NMR** (600 MHz, DMSO-d6, 298 K) $\delta$ [ppm]: 7.24 (m br, 6H, H_Ar), 5.34 (m, 4H, OCH₂), 4.83 (m, 20H, OCH₂'), 2.34 - 1.86 (s, 6H, Me).

**$^1$H/$^{13}$C HMBC-NMR** (600/150 MHz, DMSO-d6, 298 K; ausgewählte Kreuzresonanz) $\delta^1$H/ $\delta^{13}$C [ppm]: 5.34/153.07 (OCH$_2$/CO).

**IR:** ν (cm$^{-1}$) = 2251 (s, NCO), 1702 (s, $^{NH}$CO).

**NCO Gehalt:** 18 Gew.-%.

**Beispiel 2: Umsetzung von pFA-1 (INEOS, Granuform® 91) mit DMM und Toluol-2,4-diisocyanat (TDI) mittels Reaktiv-Soxhlet-Extraktion zum NCO-terminierten Präpolymer**

Die Reaktion, Aufarbeitung und Analytik wurde analog zu Bespiel 1 durchgeführt mit dem Unterschied, dass pFA-1, Granuform 91® (10.5 g) als Startmaterial eingesetzt wurde.

Laut $^1$H NMR Spektrum verfügt das gewonnene NCO-Präpolymer durchschnittlich über 8 Oxymethyleneinheiten und das daraus berechnete Molgewicht (MW$_{ber.}$) beträgt somit 606.6 g/mol. Die Anwesenheit von Urethangruppen wurde durch charakteristische Kreuzresonanzen im $^1$H/$^{13}$C HMBC-NMR Spektrum festgestellt. Charakteristische Banden im IR Spektrum zeigen die Anwesenheit von NCO- und Carbamat-Funktionalitäten. Die NCO-Gehaltsbestimmung erfolgte mittels Derivatisierung der freien Isocyanat-Gruppen mit MeOH und durch anschließende Integration charakteristischer Signale im $^1$H NMR Spektrum.

Charakterisierung:

**$^1$H NMR** (400 MHz, DMSO-d6, 296 K) δ [ppm]: 7.78 - 6.79 (m br, 6H, H$_{Ar}$), 5.35 (m, 4H, OCH$_2$), 5.01 - 4.72 (m, 20H, OCH$_2$'), 2.34 - 1.86 (s, 6H, Me).

**$^1$H/$^{13}$C HMBC-NMR** (400/100 MHz, DMSO-d6, 298 K; ausgewählte Kreuzresonanz) $\delta^1$H/ $\delta^{13}$C [ppm]: 5.35/152.4 (OCH$_2$/CO).

**IR:** ν (cm$^{-1}$) = 2251 (s, NCO), 1702 (s, $^{NH}$CO).

**NCO Gehalt:** 21 Gew.-%.

**Beispiel 3 (Vergleich): Umsetzung von pFA-2 (INEOS, Granuform® M) mit Toluol-2,4-diisocyanat (TDI) ohne Lösungsmittelzusatz unter Rückflussbedingungen**

pFA-2 (Granuform® M, 10.5 g) und TDI (12.1 g) wurden unter Argon in einen Schlenk-Kolben überführt und die entstandene weiße Suspension für 66 Stunden bei 60 °C gerührt. Dabei bildete sich ein weißer harter Feststoff, der sich nicht mehr rühren ließ. Der undefinierbare, polymere Feststoff wurde mechanisch zerkleinert, mit Hexan gewaschen und im Vakuum getrocknet. Der resultierende Rückstand wurde mit trockenem Dichlormethan versetzt und filtriert. Anschließend wurde das Filtrat unter reduziertem Druck vom Lösungsmittel befreit. NMR spektroskopische Untersuchungen des resultierenden weißen Feststoffs deuten auf ein sehr komplexes, nicht näher charakterisierbares Gemisch hin.

**Beispiel 4 (Vergleich): Umsetzung von pFA-1 (INEOS, Granuform® 91) mit DMM und Toluol-2,4-diisocyanat (TDI) unter Rückflussbedingungen**

pFA-1 (10.5 g), Dimethoxymethan (200 mL) und TDI (12.5 g) wurden unter Argon in einem Schlenk-Kolben überführt. Die entstandene weiße Suspension wurde für 66 Stunden unter Rückfluss (60 °C Ölbadtemperatur) gerührt. Anschließend wurde das Lösungsmittel bei vermindertem Druck entfernt und der Rückstand mehrmals mit trockenem *n*-Pentan gewaschen. Der erhaltene Rückstand ist ein komplexes Gemisch aus verschiedenen nicht näher charakterisierbaren Komponenten. NMR-spektroskopische Untersuchungen legen die Vermutung nahe, dass bei den gewählten Versuchsbedingungen monomerer Formaldehyd entsteht, der mit TDI zu undefinierten Addukten abreagiert.

**Beispiel 5: Umsetzung von pFA-2 (INEOS, Granuform® M) mit DMM und Toluol-2,4-diisocyanat (TDI) mittels Reaktiv-Soxhlet-Extraktion zur Mischung aus NCO-terminierten Präpolymer sowie TDI**

Die Reaktion wurde analog zu Bespiel 1 durchgeführt mit dem Unterschied, dass etwas weniger TDI (10.0 g) eingesetzt wurde und das Reaktionsprodukt nach Entfernen des Lösungsmittels nicht durch Waschen von überschüssigem TDI befreit wurde.

Laut $^1$H NMR Spektrum verfügt das gewonnene Mischung aus NCO-terminierten Präpolymer sowie unreagiertem TDI (NCO-Semipräpolymer) durchschnittlich über 9 Oxymethyleneinheiten und das daraus berechnete Molgewicht (MW$_{ber.}$) beträgt somit 636.6 g/mol. Die Anwesenheit von Urethangruppen wurde durch charakteristische Kreuzresonanzen im $^1$H/$^{13}$C HMBC-NMR Spektrum festgestellt. Charakteristische Banden im IR Spektrum zeigen die Anwesenheit von NCO- und Carbamat-Funktionalitäten. Die NCO-Gehaltsbestimmung erfolgte mittels Derivatisierung der freien Isocyanat-Gruppen mit MeOH und durch anschließende Integration charakteristischer Signale im $^1$H NMR Spektrum.

Charakterisierung:
**$^1$H NMR** (400 MHz, DMSO-d6, 296 K) δ [ppm]: 7.78 - 6.79 (m br, 6H, $H_{Ar}$), 5.35 (m, 4H, $OCH_2$), 5.01 - 4.72 (m, 16H, $OCH_2$'), 2.34 - 1.86 (s, 6H, Me) [NCO-Präpolymer].
7.50 (s, 1H, $H_{Ar}$), 7.17 (dm, $^3J_{HH}$ = 8.3 Hz, 1H, $H_{Ar}$), 7.06 (d $^3J_{HH}$ = 8.3 Hz, 1H, $H_{Ar}$), 2.12 (s, 3H, $CH_3$) [TDI].

[GHG-260-FOR]

**$^1$H/$^{13}$C HMBC-NMR** (400/100 MHz, DMSO-d6, 298 K; ausgewählte Kreuzresonanz) δ$^1$H/ δ$^{13}$C [ppm]: 5.35/152.3 ($OCH_2$/CO).
**IR:** v (cm$^{-1}$) = 2251 (s, NCO), 1702 (s, $^{NH}$CO).
**NCO Gehalt:** 32 Gew.-%.

## Beispiel 6: Umsetzung von pFA-2 (INEOS, Granuform® M) mit DMM und Hexamethylendiisocyanat (HDI) mittels Reaktiv-Soxhlet-Extraktion zum NCO-terminierten Präpolymer

Die Reaktion, Aufarbeitung und Analytik wurde analog zu Bespiel 1 durchgeführt mit dem Unterschied, dass HDI (9.64 g) anstelle von TDI eingesetzt wurde.
Laut 1H NMR Spektrum verfügt das NCO-Präpolymer durchschnittlich über 8 Oxymethyleneinheiten und das daraus berechnete Molgewicht (MWber.) beträgt somit 606.6 g/mol. Die Anwesenheit von Urethangruppen an Oxymethyleneinheiten wurde durch charakteristische Kreuzresonanzen im 1H/13C HMBC-NMR Spektrum festgestellt. Charakteristische Banden im IR Spektrum zeigen die Anwesenheit von NCO- und Carbamat-Funktionalitäten. Die NCO-Gehaltsbestimmung erfolgte mittels Derivatisierung der freien Isocyanat-Gruppen mit MeOH und durch anschließende Integration charakteristischer Signale im 1H NMR Spektrum.
Charakterisierung:
**$^1$H NMR** (400 MHz, DMSO-d6, 296 K) δ [ppm]: 7.34 (m, 2H, NH), 5.19 (m, 4H, $OCH_2$), 4.78 (m, 12H, $OCH_2$'), 3.33 (m, 4H, $^{NCO}CH_2$), 3.13 (m, 4H, $^{NH}CH_2$), 1.54 (m, 4H, $CH_2$), 1.35 (m, 12H, $CH_2$').
**$^1$H/$^{13}$C HMBC-NMR** (600/150 MHz, DMSO-d6, 298 K; ausgewählte Kreuzresonanz) δ$^1$H/ δ$^{13}$C [ppm]: 5.35/155.1 ($OCH_2$/CO).
**IR:** v (cm$^{-1}$) = 2251 (s, NCO), 1702 (s, $^{NH}$CO).
**NCO Gehalt:** 16 Gew.-%.

## Beispiel 7: Umsetzung von pFA-1 (INEOS, Granuform® M) mit DMM und Isophorondiisocyanat (IPDI) mittels Reaktiv-Soxhlet-Extraktion zum NCO-terminierten Präpolymer

Paraformaldehyd pFA-1 (Granuform® M, 15 g) wurde in der Extraktionshülse eines Soxhlet-Extraktors vorgelegt. Durch Soxhlet-Extraktion mit Dimethoxymethan als Lösungsmittel (200 mL) wurden lösliche pFA-Oligomere unter Rückfluss (52 °C Ölbadtemperatur) extrahiert und im darunter liegenden Kolben mit einem Überschuss IPDI zur Reaktion gebracht (4.72 g). Nach 138 Stunden Extraktionszeit wurde das Lösungsmittel unter vermindertem Druck entfernt und der Rückstand mit getrocknetem *n*-Pentan gewaschen und das Reaktionsprodukt als farbloser Feststoff erhalten.
Laut $^1$H NMR Spektrum verfügt das NCO-Präpolymer durchschnittlich über 10 Oxymethyleneinheiten und das daraus berechnete Molgewicht (MW$_{ber.}$) beträgt somit 762.6 g/mol. Die Anwesenheit von Urethangruppen an Oxymethyleneinheiten wurde durch charakteristische Kreuzresonanzen im $^1$H/$^{13}$C HMBC-NMR Spektrum festgestellt. Charakteristische Banden im IR Spektrum zeigen die Anwesenheit von NCO- und Carbamat-Funktionalitäten. Die NCO-Gehaltsbestimmung erfolgte mittels Derivatisierung der freien Isocyanat-Gruppen mit MeOH und durch anschließende Integration charakteristischer Signale im $^1$H NMR Spektrum.
Charakterisierung:
**$^1$H NMR** (400 MHz, DMSO-d6, 298 K) δ [ppm]: 7.34 (m, 2H, NH), 5.24 (m, 4H, $OCH_2$), 4.80 (m, 17H, $OCH_2$'), 3.89-3.03 (kb, 6H, $^NCH$ & $^NCH_2$), 1.88-1.10 (kb, 12H, $CH_2$), 1.07-0.75 (m, 18H, $CH_3$).
**$^1$H/$^{13}$C HMBC-NMR** (400/100 MHz, DMSO-d6, 299 K; ausgewählte Kreuzresonanz) δ$^1$H/ δ$^{13}$C [ppm]: 5.24/153.4 ($OCH_2$/CO).
**IR:** v (cm$^{-1}$) = 2251 (s, NCO), 1702 (s, $^{NH}$CO).
**NCO Gehalt:** 17 Gew.-%.

| Beispiel | pFA | LM | OH-reaktive Verbindung | Schritt ii)$^{a)}$ | Schritt iii)$^{b)}$ | n$^{c)}$ | $M_W$(ber) [g/mol] | NCO [Gew.-%] |
|---|---|---|---|---|---|---|---|---|
| 1 | 2 | DMM | TDI | ja | ja | 12 | 726,7 | 18 |

**EP 3 653 657 A1**

(fortgesetzt)

| Beispiel | pFA | LM | OH-reaktive Verbindung | Schritt ii)[a] | Schritt iii)[b] | n[c] | $M_W$(ber) [g/mol] | NCO [Gew.-%] |
|---|---|---|---|---|---|---|---|---|
| 2 | 1 | DMM | TDI | ja | ja | 8 | 606.6 | 21 |
| 3 (Vgl.) | 2 | - | TDI | nein | nein | _[d] | _[d] | _[d] |
| 4 (Vgl.) | 1 | DMM | TDI | nein | nein | _[e] | _[e] | _[e] |
| 5 | 2 | DMM | TDI | ja | ja | 9 | 636.6 | 32 |
| 6 | 2 | DMM | HDI | ja | ja | 8 | 606,6 | 16 |
| 7 | 2 | DMM | IPDI | ja | ja | 10 | 762,6 | 17 |

[a] Schritt ii) Entnahme der in Schritt i) hergestellten Formaldehydlösung aus dem ersten Behälter und Überführung in einen zweiten OH-reaktive Verbindung enthaltenden Behälter, [b] Schritt iii) destillative Rückführung des Lösungsmittels aus dem zweiten Behälter in den ersten Behälter [c] zahlenmittlere Anzahl an Polyoxymethylenwiederholungseinheiten, [d] weißen Feststoff mit komplexem, nicht näher charakterisierbarem Gemisch im ersten Behälter, [e] komplexes, nicht näher charakterisierbares Gemisch im ersten Behälter

**Patentansprüche**

1. Verfahren zur Herstellung eines Präpolymers umfassend einen Polyoxymethylen-Block, wobei das Verfahren folgende Schritte umfasst:

   i) Herstellung einer Formaldehyd Lösung (a) durch Zugabe eines Lösungsmittels zu polymerem Formaldehyd in einem ersten Behälter;
   ii) Entnahme der in Schritt i) hergestellten Formaldehydlösung aus dem ersten Behälter und Überführung in einen zweiten OH-reaktive Verbindung enthaltenden Behälter unter Bildung einer das Präpolymer enthaltenden Lösung (b);
   iii) Destillative Rückführung des Lösungsmittels aus dem zweiten Behälter in den ersten Behälter;

   wobei das Formaldehyd m terminale Hydroxylgruppen aufweist;
   wobei m eine natürliche Zahl von zwei oder mehr ist,
   wobei die OH-reaktive Verbindung m oder mehr terminale OH-reaktive Gruppen aufweist; wobei das Lösungsmittel keine OH-reaktiven funktionellen Gruppen enthält sowie selbst nicht mit OH-reaktiven Verbindungen reagiert;
   wobei die Lösung (b) in Schritt ii) eine Temperatur im zweiten Behälter kleiner oder gleich 80 °C bevorzugt kleiner oder gleich 70 °C und besonders bevorzugt kleiner oder gleich 60 °C aufweist;
   und wobei die Temperatur der Formaldehyd Lösung (a) im ersten Behälter in Schritt i) kleiner oder gleich als die Temperatur der Lösung (b) im zweiten Behälter ist.

2. Verfahren gemäß Anspruch 1, wobei in Schritt i) das Lösungsmittel diskontinuierlich oder kontinuierlich in den ersten Behälter zugegeben wird.

3. Verfahren gemäß Anspruch 1 oder 2, wobei die in Schritt ii) hergestellte Formaldehydlösung diskontinuierlich oder kontinuierlich aus dem ersten Behälter entnommen wird.

4. Verfahren gemäß einem der Ansprüche 1 bis 3, wobei in Schritt iii) das Lösungsmittel diskontinuierlich oder kontinuierlich aus dem zweiten Behälter in den ersten Behälter zurückgeführt wird.

5. Verfahren gemäß einem der Ansprüche 1 bis 4, wobei das in Schritt i) verwendete Lösungsmittel ein aprotisches Lösungsmittel ist.

6. Verfahren gemäß Anspruch 5, wobei das aprotische Lösungsmittel eine Siedetemperatur von kleiner oder gleich 80 °C, bevorzugt kleiner oder gleich 70 °C und besonders bevorzugt kleiner oder gleich 60 °C bei 1 bara aufweist.

7. Verfahren gemäß Anspruch 5 oder 6, wobei das aprotische Lösungsmittel eine oder mehrere Verbindung(en) ist und ausgewählt wird aus der Gruppe bestehend aus n-Pentan, n-Hexan, n-Heptan, Petrolether, Kohlenstoffdisulfid, Kohlenstoffdioxid, Trichlorethylen, Methylenechlorid, Kolhenstofftetrachlorid, Chloroform, Trichlorfluormethan, Tetrabrommethan, Bromodichlormethan, Fluorbenzol, 1,4-Difluorobenzol, Dichlorfluormethan, Difluordichlormethan, Chlordifluormethan, Ethylacetat, Isopropylacetat, Methylformiat, Ethylformiat, Isopropylformiat, Propylformiat, Acetaldehydedimethylacetal, Acetonitril, Methyl-tert.-Butylether, tert-Butylethylether, tert.-Amylmethylether, Methylpropylether, sec. Butylmethylether, Butylmethylether, Methyl-n-propylether, 1-Ethoxypropan, 1,3-Dioxolan, 1,1-Dimethoxyethan, Diisopropylether, 2-Methyl-THF, 2,2 Dimethoxypropan, Dimethylether, Dimethoxymethan, Ethylmethylether, Diethylether, Diethoxymethan, Dimethoxyethan, Tetrahydrofuran (THF), 1,4,7,10-Tetraoxacyclododecan ([12]Krone-4), Aceton und Methylethylketon bevorzugt n-Pentan, n-Hexan, n-Heptan, Petrolether, Kohlenstoffdisulfid, Kohlenstoffdioxid, Ethylacetat, Methylformiat, Acetonitril, Methyl-tert.-Butylether, 1-Ethoxypropan, 1,3-Dioxolan, Acetaldehyddimethylacetal, Diisopropylether, 2-Methyl-THF, 2,2 Dimethoxypropan, Dimethylether, Dimethoxymethan, Ethylmethylether, Diethylether, Diethoxymethan, Dimethoxyethan, Tetrahydrofuran (THF), Aceton und Methylethylketon besonders bevorzugt n-Pentan, n -Hexan, Petrolether, Kohlenstoffdisulfid, Kohlenstoffdioxid, Methylformiat, Methyl-tert.-Butylether, 1-Ethoxypropan, Dimethoxyethan, Dimethylether, Dimethoxymethan, Ethylmethylether, Diethylether, Tetrahydrofuran (THF) und Aceton und ganz besonders bevorzugt n-Pentan, n -Hexan, Petrolether, Kohlenstoffdisulfid, Kohlenstoffdioxid, Methylformiat, Methyl-tert.-Butylether, Dimethoxyethan, Dimethylether, Dimethoxymethan, Ethylmethylether, Diethylether und Aceton.

8. Verfahren gemäß einem der Ansprüche 1 bis 7, wobei die OH-reaktive Verbindung eine Dicarbonsäure, eine Tricarbonsäure, ein Dicarbonsäurechlorid, ein Tricarbonsäurechlorid, ein Dicarbonsäureazid, ein Tricarbonsäureazid, ein Dicarbonsäureanhydrid, ein Tricarbonsäureanhydrid, ein organisches Diazid, ein organisches Triazid, ein Diepoxid, ein Triepoxid, ein Halomethyloxiran, wie z.B. 1-Chlor-2,3-epoxypropan (Epichlorhydrin) oder 1-Brom-2,3-epoxypropan (Epibromohydrin), ein Diaziridin, ein Triaziridin, ein Disilylchlorid, ein Trisilylchlorid, ein Disilan, ein Trisilan, ein n-Alkyldi(magnesiumhalogenid), ein n-Alkyltri(magnesiumhalogenid), ein Disulfonylchlorid, ein Trisulfonylchlorid, ein organisches Di(chlorosulfite), ein organisches Tri(chlorosulfite),ein organisches Di(phosphordibromid), ein organisches Tri(phosphordibromid), Polythiocyanat und/oder ein Polyisocyanat bevorzugt ein Polyisocyanat.

9. Verfahren gemäß Anspruch 8, wobei die OH-reaktive Verbindung ein Polyisocyanat ist und die Reaktion bei einem NCO-Index von ≥ 100 bis ≤ 5000 durchgeführt wird und ein NCO-terminiertes Präpolymer resultiert.

10. Verfahren gemäß Anspruch 9, wobei das Polyisocyanat eine oder mehrere Verbindung(en) ist und ausgewählt wird aus der Gruppe bestehend aus 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diiso¬cyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Di-isocyanatodicyclohexylmethan (H12MDI), , 4-Isocyanatomethyl-1,8-octandiisocyanat (Triisocyanatononan, TIN), ω,ω'-Diisocyanato-1,3-dimethylcyclohexan (H6XDI), 1-Isocyanato-1-methyl-3-isocyanato-methyl¬cyclo¬¬hexan, 1-Isocyanato-1-methyl-4-isocyanato-methyl¬cyclo¬hexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4-Diisocyanatotoluol (TDI), 2,6-Diisocyanatotoluol (TDI)2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,5-Diisocyanatonaphthalin, 1,3-Bis(isocyanato-methyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate, bevorzugt 1,5-Diisocyanatopentan (PDI), ,6-Diisocyanatohexan (HDI), 1-Isocyanato-3,3,5-trimethyl-5-isocyanatomethylcyclohexan (Isophorondiisocyanat, IPDI), ,4'-Di-isocyanatodicyclohexylmethan (H12MDI), 2,4-Diisocyanatotoluol (TDI), 2,6-Diisocyanatotoluol (TDI)2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,3-Bis(isocyanato-methyl)benzol (XDI) deren Trimerisierungs- oder höheren Oligomerisierungsprodukte und/oder deren Addukte.

11. Präpolymer umfassend Polyoxymethylen-Block nach einem der vorherigen Ansprüche, bevorzugt ein NCO-terminiertes Präpolymer gemäß Anspruch 9 oder 10, erhältlich mit einer zahlenmittleren Anzahl an Polyoxymethylenwiederholungseinheiten von 2 bis 50 bevorzugt 4 bis 30 und besonders bevorzugt von 8 bis 20 beträgt, wobei die Anzahl an Polyoxymehylenwiederholungseinheiten mittels Protonenresonanzspektroskopie bestimmt wurde.

12. Präpolymer umfassend Polyoxymethylen-Block, gemäß Anspruch 11, wobei das Präpolymer umfassend Polyoxymethylen-Block ein NCO-terminiertes Präpolymer ist mit einem Gehalt an reaktiven Isocyanatgruppen von ≥ 4 Gew.-% bis ≤25 Gew.-% bezogen auf das Präpolymer umfassend Polyoxymethylen-Block der Isocyanatgruppen im Präpolymer umfassend Polyoxymethylen-Block, wobei der Gehalt an reaktiven Isocyanatgruppen mittels Derivatisierung mit Methanol NMR-spektroskopisch bestimmt wurde.

13. Mischung umfassend ein Präpolymer umfassend Polyoxymethylen-Blockgemäß Anspruch 11 oder 12 sowie eine OH-reaktive Verbindung, bevorzugt Polyisocyanat gemäß einem der Ansprüche 9 bis 11.

14. Mischung gemäß Anspruch 13, wobei die Mischung einen Gehalt an reaktiven Isocyanatgruppen von ≥ 4 Gew.-% bis ≤50 Gew.-% bezogen auf den Gesamtanteil der Isocyanatgruppen aufweist, wobei der Gehalt an reaktiven Isocyanatgruppen mittels Derivatisierung mit Methanol NMR-spektroskopisch bestimmt wurde.

15. Chemisch-technisches Verfahren Verfahrenzur Herstellung eines Produktes definierter Zusammensetzung umfassend folgende Schritte:

   i) Herstellung einer Edukt-Lösung (1) durch Zugabe eines Lösungsmittels (1) zu einem Edukt (1), welches eine Löslichkeit von < 1g/L besitzt und dessen Schmelzpunkt höher oder gleich seinem Zersetzungspunkt ist, in einem ersten Behälter,

   ii) Entnahme der in Schritt i) hergestellten Edukt-Lösung (1) aus dem ersten Behälter und Überführung in einen zweiten, eine Edukt (1) reaktive Verbindung enthaltenden Behälter unter Bildung einer das Produkt enthaltenden Lösung (2),

   iii) Destillative Rückführung des Lösungsmittels (1) aus dem zweiten Behälter in den ersten Behälter, wobei die das Produkt enthaltende Lösung (2) in Schritt ii) eine Temperatur im zweiten Behälter kleiner oder gleich 150 °C bevorzugt kleiner oder gleich 130 °C und besonders bevorzugt kleiner oder gleich 110 °C aufweist; wobei die Temperatur im ersten Behälter in Schritt i) kleiner oder gleich als die Temperatur im zweiten Behälter ist; und wobei das Lösungsmittel (1) nicht mit dem Edukt (1), der Edukt (1)-reaktiven Verbindung und dem Produkt reagiert.

Abbildung 1:

Abbildung 2:

Europäisches
Patentamt

European
Patent Office

Office européen
des brevets

## EUROPÄISCHER RECHERCHENBERICHT

**Nummer der Anmeldung**

EP 18 20 6860

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br>A | US 3 575 930 A (DINBERGS KORNELIUS)<br>20. April 1971 (1971-04-20)<br>* Spalte 3; Beispiele 1, 2 *<br>* Spalte 2, Zeile 5 - Zeile 10 *<br>----- | 11-14<br><br>1-10,15 | INV.<br>C08G18/48<br>C08G18/56<br>C08G18/73<br>C08G18/75 |
| X,D<br>A | EP 3 129 419 B1 (COVESTRO DEUTSCHLAND AG [DE]) 19. September 2018 (2018-09-19)<br>* Seite 16; Beispiel 8 *<br>* Anspruch 13 *<br>----- | 11-14<br><br>1-10,15 | C08G18/76<br>C08G2/30 |

**RECHERCHIERTE SACHGEBIETE (IPC)**

C08G
C09J

Der vorliegende Recherchenbericht wurde für alle Patentansprüche erstellt

| Recherchenort | Abschlußdatum der Recherche | Prüfer |
|---|---|---|
| München | 6. Mai 2019 | Wohnhaas, Christian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 6860

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2019

| Im Recherchenbericht angeführtes Patentdokument | | Datum der Veröffentlichung | Mitglied(er) der Patentfamilie | | Datum der Veröffentlichung |
|---|---|---|---|---|---|
| US 3575930 | A | 20-04-1971 | KEINE | | |
| EP 3129419 | B1 | 19-09-2018 | CN | 106414532 A | 15-02-2017 |
| | | | EP | 3129419 A1 | 15-02-2017 |
| | | | ES | 2702327 T3 | 28-02-2019 |
| | | | JP | 2017510686 A | 13-04-2017 |
| | | | SG | 11201608076R A | 29-11-2016 |
| | | | US | 2017096526 A1 | 06-04-2017 |
| | | | US | 2018371159 A1 | 27-12-2018 |
| | | | WO | 2015155094 A1 | 15-10-2015 |

EPO FORM P0461

Für nähere Einzelheiten zu diesem Anhang : siehe Amtsblatt des Europäischen Patentamts, Nr.12/82

**EP 3 653 657 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2007211082 A
- WO 2004096746 A1
- GB 807589 A
- EP 1418190 A1
- US 3754053 A
- US 3575930 A
- US 20020016395 A
- EP 3129419 B1
- JP 4306215 A

- WO 2004096746 A
- WO 2014095679 A1
- EP 17206871 A
- EP 3080177 B1
- WO 1981001712 A1
- US 3436375 A
- JP 03263454 B
- JP 2928823 B

**In der Beschreibung aufgeführte Nicht-Patentliteratur**

- **LANGANKE et al.** Journal of Polymer Science. *Part A: Polymer Chemistry,* 2015, vol. 53 (18), 2071-2074
- **Z.B. M. HAUBS.** *Polyoxymethylenes, Ullmann's Encyclopedia of Industrial Chemistry,* 2012

- **G. REUS.** Formaldehyde. *Polyoxymethylenes, Ullmann's Encyclopedia of Industrial Chemistry,* 2012
- *Bull. Chem. Soc. J.,* 1994, vol. 67, 2560-2566
- **E. FANGHÄNEL.** Organikum. WILEY-VHC Verlag GmbH, 2004, 54f